# EUROPEAN PATENT APPLICATION

(11) **EP 3 988 880 A1**
(43) Date of publication of application: **27.04.2022**
(21) Application number: 21203517.4
(22) Date of filing: 19.10.2021
(51) Int. Cl.: F28C 1/14

(54) **ADIABATIC CONDENSER WITH SPLIT COOLING PADS**

(30) Priority: 21.10.2020 US 202017076424
(71) Applicant: Heatcraft Refrigeration Products LLC, Stone Mountain, GA 30087 (US)
(72) Inventor: KUPPUSAMY, Karthick, Salem, Tamil Nadu (IN)
(74) Representative: Barker Brettell LLP

(57) **Abstract**

An adiabatic cooling system (100) includes a condenser coil (110), a plurality of adiabatic pads (120), a plurality of frames (125), and a pad pivoting system (160). Each frame (125) is configured to hold a respective one of the plurality of adiabatic pads (120) and to pivot about a respective one of a plurality of pivot points (121). The pad pivoting system (160) is configured to rotate each one of the plurality of frames (125) about the respective pivot point (121) of the frame (125) from an open position to a closed position, and to rotate each one of the plurality of frames (125) about the respective pivot point (121) of the frame (125) from the closed position to the open position. When the plurality of frames (125) are in the open position, intake air for the adiabatic cooling system (100) is unimpeded by the plurality of adiabatic pads (120) as the intake air enters the adiabatic cooling system (100) and contacts the condenser coil (110).

## Description

### TECHNICAL FIELD

This disclosure relates in general to adiabatic condensers, and more particularly to an adiabatic condenser with split cooling pads.

### BACKGROUND

Cooling systems are used in many types of residential and commercial applications. As one example, commercial refrigeration systems are used by many types of businesses such as supermarkets and warehouses. Many cooling systems utilize adiabatic cooling processes to pre-cool intake air that enters an outdoor condenser unit. Such systems may be inefficient and wasteful of water and electricity resources.

### SUMMARY

According to one embodiment, an adiabatic cooling system includes a condenser coil, a plurality of adiabatic pads, a plurality of frames, and a pad pivoting system. Each frame is configured to hold a respective one of the plurality of adiabatic pads and to pivot about a respective one of a plurality of pivot points. The pad pivoting system is configured to rotate each one of the plurality of frames about the respective pivot point of the frame from an open position to a closed position, and to rotate each one of the plurality of frames about the respective pivot point of the frame from the closed position to the open position. When the plurality of frames are in the open position, intake air for the adiabatic cooling system is unimpeded by the plurality of adiabatic pads as the intake air enters the adiabatic cooling system and contacts the condenser coil. When the plurality of frames are in the closed position, intake air for the adiabatic cooling system passes through the plurality of adiabatic pads prior to contacting the condenser coil.

According to another embodiment, an adiabatic cooling system includes a condenser coil, a plurality of adiabatic pads, a plurality of frames, and a pad pivoting system. Each frame is configured to hold a respective one of the plurality of adiabatic pads. The pad pivoting system is configured to move each one of the plurality of frames from an open position to a closed position, and to move each one of the plurality of frames from the closed position to the open position. When the plurality of frames are in the closed position, intake air for the adiabatic cooling system passes through the plurality of adiabatic pads prior to contacting the condenser coil. When the plurality of frames are in the open position, intake air for the adiabatic cooling system enters the adiabatic cooling system and contacts the condenser coil without passing through the plurality of adiabatic pads.

According to another embodiment, an adiabatic cooling system includes a condenser coil, a plurality of adiabatic pads, and a pad pivoting system. The pad pivoting system is configured to move each one of the plurality of pads from an open position to a closed position, and to move each one of the plurality of pads from the closed position to the open position. When the plurality of pads are in the closed position, intake air for the adiabatic cooling system passes through the plurality of adiabatic pads prior to contacting the condenser coil. When the plurality of pads are in the open position, intake air for the adiabatic cooling system enters the adiabatic cooling system and contacts the condenser coil without passing through the plurality of adiabatic pads.

Technical advantages of certain embodiments may include providing enhanced functionality in an adiabatic cooling system that permits the system to run more efficiently, thereby conserving resources such as electricity. Other technical advantages will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present disclosure and its advantages, reference is now made to the following description, taken in conjunction with the accompanying drawings, in which:
FIGURE 1 illustrates an adiabatic cooling system with split adiabatic pads in a closed position, according to certain embodiments;
FIGURE 2 illustrates an adiabatic cooling system with split adiabatic pads in an open position, according to certain embodiments;
FIGURE 3 illustrates a side view of the adiabatic cooling system of FIGURE 2, according to certain embodiments;
FIGURE 4 illustrates an end view of an adiabatic cooling system having center pivot points for its split adiabatic pads, according to certain embodiments; and
FIGURE 5 illustrates an end view of an adiabatic cooling system having end pivot points for its split adiabatic pads, according to certain embodiments.

### DETAILED DESCRIPTION

Gas cooling systems are used in many types of residential and commercial applications. As one example, commercial refrigeration systems are used by many types of businesses such as supermarkets and warehouses. Many cooling systems utilize adiabatic cooling processes to pre-cool air before it enters an outdoor condenser unit. For example, large commercial refrigeration systems may utilize cooling towers where adiabatic cooling pads are sprayed with water in order to pre-cool intake air before it contacts condenser coils. While pre-cooling air using adiabatic cooling pads aids in the overall efficiency of cooling systems in certain environmental conditions, adiabatic pads can be detrimental to the efficiency of the system in other environmental conditions. As one example, in cooler ambient temperatures, some adiabatic cooling systems switch to a dry mode where adiabatic cooling pads and water are not needed to pre-cool intake air. However, since most systems have immovable adiabatic pads, intake air must still pass through the adiabatic pads even when pre-cooling is not needed. This reduces the overall efficiency of the adiabatic cooling system by increasing the amount of resources (e.g., electricity) needed to operate the system.

To address these and other limitations with certain adiabatic cooling systems, embodiments of the disclosure utilize split adiabatic cooling pads that may be rotated or otherwise moved between open and closed positions. In the open position, intake air for the adiabatic cooling system enters the adiabatic cooling system and contacts the condenser coil without passing through the adiabatic pads. In the closed position, intake air for the adiabatic cooling system passes through the adiabatic pads prior to contacting the condenser coil. This selective opening and closing of the adiabatic pads enables adiabatic cooling systems to conserve resources such as electricity since the adiabatic pads may be removed from the air-intake path when pre-cooling of the intake air is not needed (e.g., in a dry mode of operation). The following describes adiabatic cooling systems with split cooling pads for providing these and other desired features.

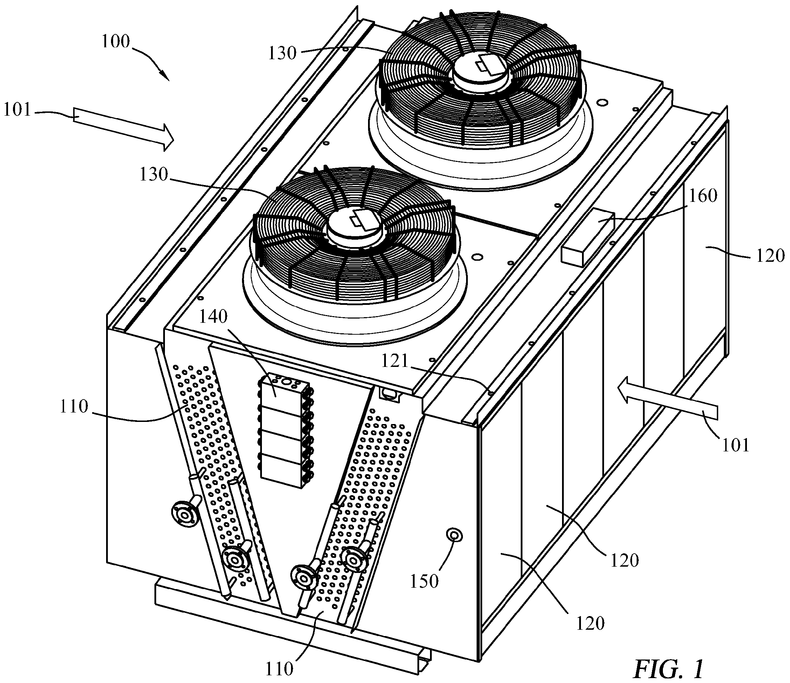

FIGURES 1-3 illustrate an adiabatic cooling system 100, according to certain embodiments. In some embodiments, adiabatic cooling system 100 includes one or more condenser coils 110, multiple adiabatic pads 120, one or more fans 130, a controller 140, and a pad pivoting system 160. In some embodiments, adiabatic cooling system 100 may include pad frames 125 that each hold an adiabatic pad 120. Water from a water distribution system (not illustrated) is selectively applied to adiabatic pads 120 in order to cool intake air 101 as it enters adiabatic cooling system 100 but before contacting condenser coils 110. Pad pivoting system 160 is mechanically coupled to adiabatic pads 120 or pad frames 125 in order to cause adiabatic pads 120 to move between open and closed positions as described herein. Controller 140 is communicatively coupled to pad pivoting system 160 and instructs pad pivoting system 160 to move adiabatic pads 120 between the open and closed positions.

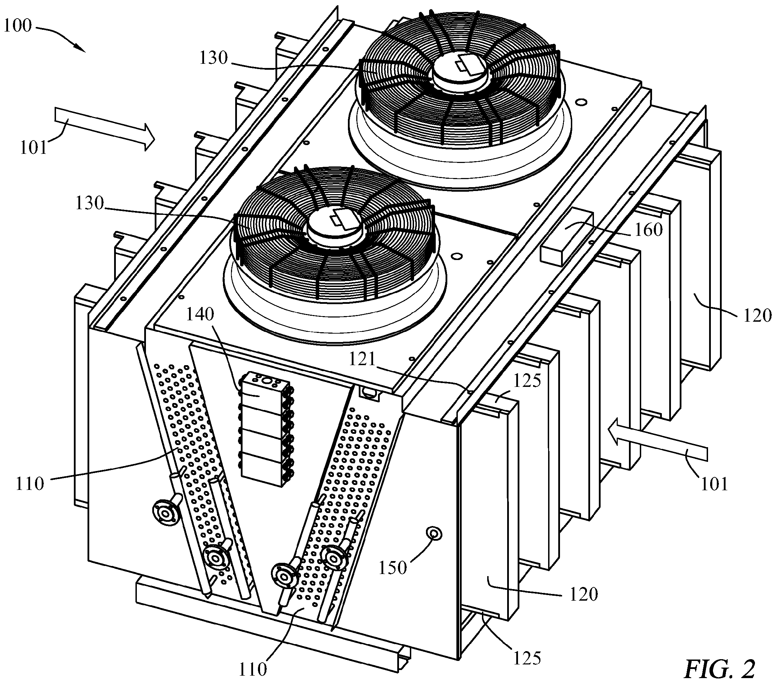

In general, adiabatic cooling system 100 utilizes multiple adiabatic cooling pads 120 that may be rotated, pivoted, or otherwise moved between open and closed positions. In typical adiabatic cooling systems, adiabatic pads are stationary and are always in the air-intake path of intake air 101 regardless of the mode of operation of the cooling system. This decreases the efficiency of such systems since intake air 101 must be pulled through adiabatic pads 120 even when pre-cooling is not needed (e.g., in dry modes of operation). Adiabatic cooling system 100, on the other hand, utilizes split adiabatic pads 120 that may be rotated, pivoted, or otherwise moved based on whether or not pre-cooling is needed. For example, adiabatic cooling system 100 may move adiabatic pads 120 to their open positions (e.g., as illustrated in FIGURE 2) when pre-cooling is not needed (e.g., in dry modes of operation). In the open position, intake air 101 for adiabatic cooling system 100 enters adiabatic cooling system 100 and contacts condenser coils 110 without passing through adiabatic pads 120. This decreases electricity requirements for adiabatic cooling system 100 and increases efficiency since intake air 101 is not forced to flow through adiabatic pads 120. However, when pre-cooling is needed (e.g., a wet mode of operation), adiabatic cooling system 100 may move adiabatic pads 120 to their closed positions. In the closed position (e.g., as illustrated in FIGURE 1), intake air 101 for adiabatic cooling system 100 passes through adiabatic pads 120 prior to contacting condenser coils 110. This selective opening and closing of adiabatic pads 120 enables adiabatic cooling system 100 to conserve resources such as electricity since adiabatic pads 120 may be removed from the air-intake path when adiabatic pads 120 are not needed (e.g., in a dry mode of operation).

Adiabatic cooling system 100 is a system used to cool a refrigerant by condensing it from its gaseous state to its liquid state. In most commercial refrigeration applications, adiabatic cooling system 100 is located outdoors and is fluidly coupled to indoor portions of the system (e.g., air handlers) via one or more refrigerant lines. In some embodiments, adiabatic cooling system 100 is a cooling tower. Adiabatic cooling system 100 includes one or more condenser coils 110 and one or more motors that turn one or more fans 130. Fans 130 draw intake air 101 into adiabatic cooling system 100 and through condenser coils 110, thereby cooling and condensing the refrigerant and providing cooling to adiabatic cooling system 100. In certain environmental situations (e.g., in high temperatures or a wet mode of operation), fans 130 draw intake air 101 into adiabatic cooling system 100 through adiabatic pads 120 that have been sprayed with water. When adiabatic pads 120 are not needed to pre-cool intake air 101 (e.g., in low temperatures or a dry mode of operation), fans 130 draw intake air 101 into adiabatic cooling system 100 without passing through adiabatic pads 120. By bypassing adiabatic pads 120 when pre-cooling of intake air 101 is not needed, the load on fans 130 is thereby reduced. This decreases power requirements and increases the efficiency of adiabatic cooling system 100.

Adiabatic pads 120 may be made of any appropriate material that is capable of receiving and retaining water from a water distribution system. As a specific example, adiabatic pads 120 may be made of a mesh material through which intake air 101 passes before it enters condenser coils 110. As intake air 101 passes through the wet mesh material of adiabatic pads 120, it cools and helps improve the efficiency of adiabatic cooling system 100. Adiabatic pads 120 may be in any appropriate size, shape, and configuration and are not limited to those illustrated in the included figures. In some embodiments, adiabatic pads 120 are housed by pad frames 125, described in more detail below. In other embodiments, adiabatic pads 120 are directly coupled to adiabatic cooling system 100 without using pad frames 125.

In some embodiments, adiabatic cooling system 100 includes pad frames 125 to hold adiabatic pads 120. Pad frames 125 may be formed from any appropriate material such as metal or plastic. As illustrated in FIGURE 2, some pad frames 125 may include a top portion and bottom portion that allows adiabatic pads 120 to easily slide into and out of pad frames 125. This allows adiabatic pads 120 to be easily removed (e.g., for cleaning or replacement) and installed in pad frames 125. As described in more detail below, pad frames 125 may be pivotally coupled to adiabatic cooling system 100 at an end 126 or center 127 of pad frame 125. In some embodiments, pad frames 125 are mechanically coupled to pad pivoting system 160 in order to be moved between open and closed positions by pad pivoting system 160.

Controller 140 is any appropriate device or circuitry that controls functions of adiabatic cooling system 100. Controller 140 may be within or coupled to adiabatic cooling system 100, or it may be separate from adiabatic cooling system 100 in some embodiments. In some embodiments, controller 140 is a circuit board within adiabatic cooling system 100.

In some embodiments, controller 140 includes an interface, one or more memory devices, and a processor. Controller 140 may also include additional components typically included within a controller for a cooling system, such as a power supply, relays, and the like. The interface of controller 140 may be a conventional interface that is used to receive and transmit data for a controller, such as a micro-controller.

The one or more memory devices of controller 140 may store operating instructions to direct the operation of the processor of controller 140 when initiated thereby. In some embodiments, the memory of controller 140, or at least of portion thereof, is a non-volatile memory. The operating instructions may correspond to algorithms that provide the functionality of the methods and algorithms disclosed herein. In some embodiments, the processor of controller 140 may be a microprocessor. The interface, processor, and memory of controller 140 may be coupled together via conventional means to communicate information.

In some embodiments, adiabatic cooling system 100 includes a manual control 150. In general, manual control 150 is any user-operated device (e.g., switch, button, control, etc.) on adiabatic cooling system 100 that allows a user to control the positions of adiabatic pads 120. For example, a technician may operate manual control 150 in order to move adiabatic pads 120 from their closed positions to their open positions. This would allow, for example, the technician to gain access to condenser coils 110 (e.g., in order to power-wash condenser coils 110) and to easily remove adiabatic pads 120 for cleaning or replacement. Manual control 150 may also be operated in order to move adiabatic pads 120 from their open positions to their closed positions (e.g., after maintenance of adiabatic cooling system 100 and adiabatic pads 120 is complete). In some embodiments, manual control 150 may be communicatively coupled to controller 140 or pad pivoting system 160 in order to provide manual control of the positions of adiabatic pads 120.

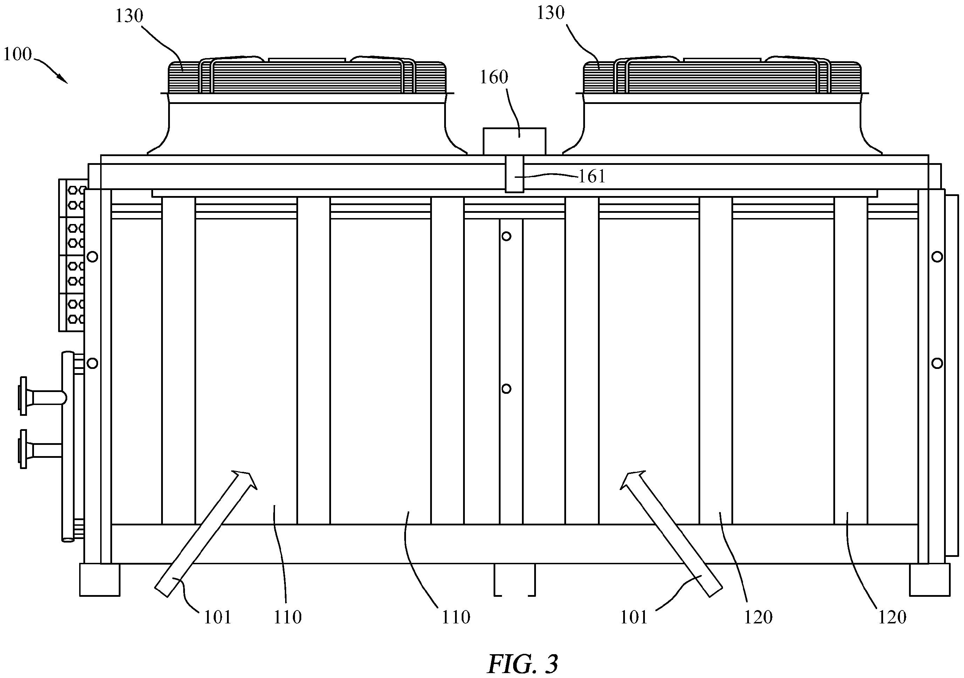

Pad pivoting system 160 is any electrical or mechanical system that is capable of moving adiabatic pads 120 or pad frames 125 between their open and closed positions. In some embodiments, pad pivoting system 160 includes a rack and pinion 165 as illustrated in FIGURE 3. In such an embodiment, a toothed rack portion of rack and pinion 165 is coupled to each adiabatic pad 120 or pad frame 125, and the rack portion is mechanically coupled to a pinion portion of rack and pinion 165 (e.g., via a gear). A motor turns the pinion portion of rack and pinion 165, which thereby moves the rack and all pad frames 125 or adiabatic pads 120 coupled to the rack. In general, pad pivoting system 160 may be communicatively coupled to controller 140, thereby enabling controller 140 to instruct pad pivoting system 160 to move adiabatic pads 120 or pad frames 125 between the open and closed positions.

In operation, adiabatic cooling system 100 selectively moves adiabatic pads 120 between their closed positions (e.g., as illustrated in FIGURE 1) and their open positions (e.g., as illustrated in FIGURE 2). In embodiments that include pad frames 125, adiabatic cooling system 100 moves adiabatic pads 120 between their closed positions and their open positions by moving pad frames 125. When adiabatic pads 120 are in the closed position, intake air 101 for adiabatic cooling system 100 passes through adiabatic pads 120 prior to contacting condenser coils 110. When adiabatic pads 120 are in the open position, intake air 101 for adiabatic cooling system 100 is unimpeded by adiabatic pads 120 since intake air 101 does not pass through adiabatic pads 120 prior to contacting condenser coils 110. As a result, the efficiency of adiabatic cooling system 100 may be improved because fans 130 do not have to pull intake air 101 through adiabatic pads 120 when pre-cooling is not needed.

Various conditions or signals are utilized by controller 140 to determine whether adiabatic pads 120 should be in their closed or open positions. In some embodiments, ambient temperatures may be used to control the positions of adiabatic pads 120. For example, if the ambient temperature surrounding adiabatic cooling system 100 as determined by a temperature sensor is greater than or equal to a certain temperature (e.g., 70 degrees Fahrenheit), controller 140 may determine that adiabatic cooling system 100 should be in a wet mode of operation and thereby instruct pad pivoting system 160 to move adiabatic pads 120 to their closed positions so that intake air 101 may be pre-cooled prior to contacting condenser coils 110. If the ambient temperature surrounding adiabatic cooling system 100 as determined by a temperature sensor is less than a certain temperature (e.g., 70 degrees Fahrenheit), controller 140 may determine that adiabatic cooling system 100 should be in a dry mode of operation and thereby instruct pad pivoting system 160 to move adiabatic pads 120 to their open positions so that intake air 101 is not pre-cooled prior to contacting condenser coils 110.

In some embodiments, an input to a water distribution system for adiabatic pads 120 may be used in parallel by pad pivoting system 160 to open or close adiabatic pads 120. For example, if the water distribution system for adiabatic pads 120 is enabled in order to start spraying water on adiabatic pads 120, pad pivoting system 160 may move adiabatic pads 120 from their open positions to their closed positions. Likewise, if the water distribution system for adiabatic pads 120 is disabled in order to cease spraying water on adiabatic pads 120, pad pivoting system 160 may move adiabatic pads 120 from their closed positions to their open positions.

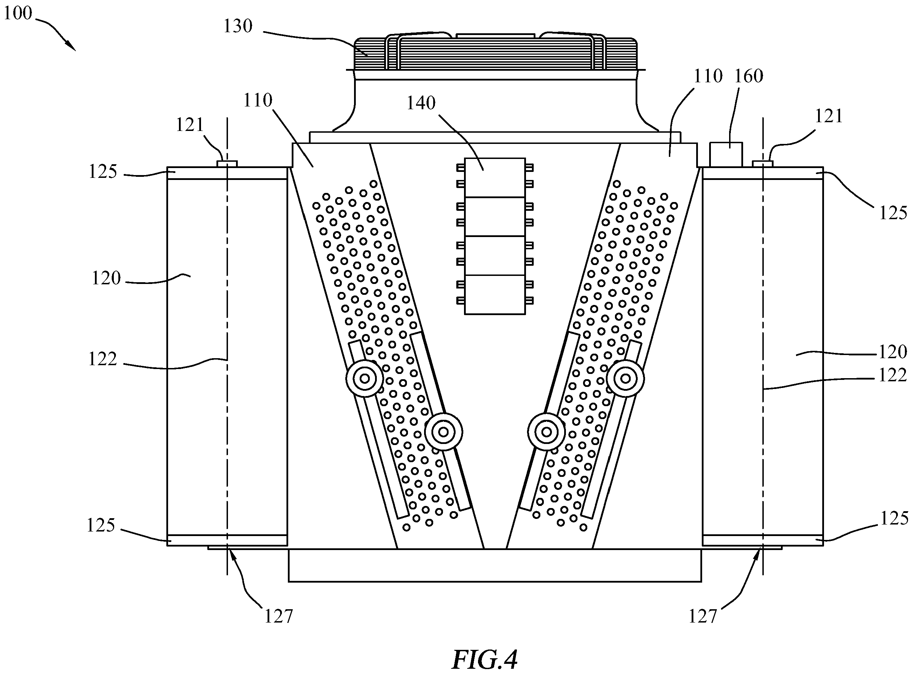

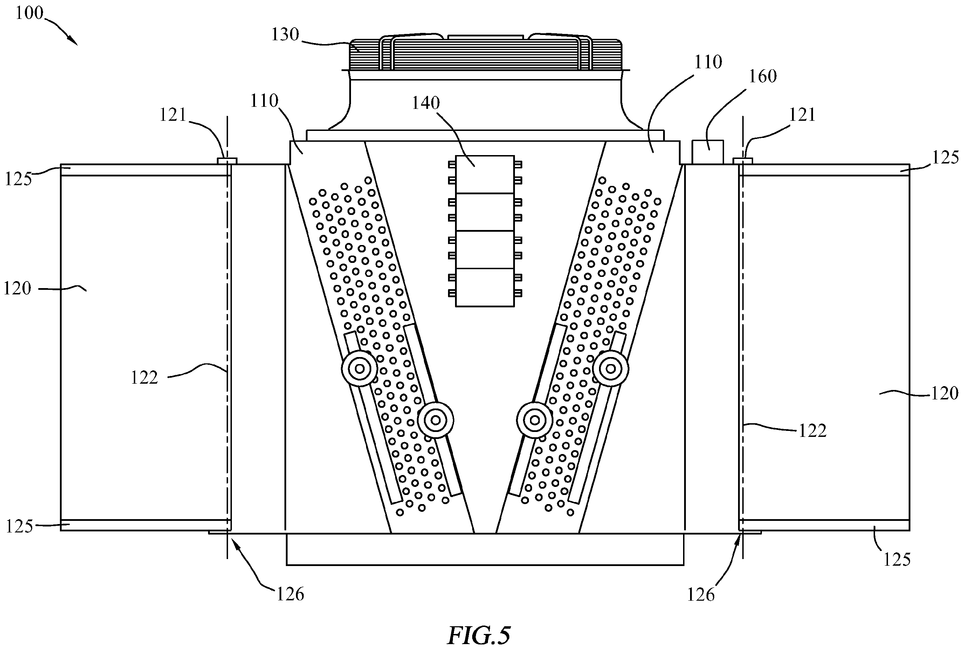

FIGURES 4-5 illustrate various embodiments of how adiabatic pads 120 and pad frames 125 may be coupled to adiabatic cooling system 100. In FIGURE 4, adiabatic pads 120 and pad frames 125 are coupled to adiabatic cooling system 100 at a pivot point 121 on top of adiabatic cooling system 100 that is proximate a center 127 of adiabatic pad 120 and pad frame 125. In this embodiment, adiabatic pads 120 and pad frames 125 pivot between the open and closed positions about a vertical pivot axis 122, which is proximate center 127. In FIGURE 5, adiabatic pads 120 and pad frames 125 are coupled to adiabatic cooling system 100 at a pivot point 121 that is proximate an end 126 of adiabatic pad 120 and pad frame 125. In this embodiment, adiabatic pads 120 and pad frames 125 pivot between the open and closed positions about vertical pivot axis 122, which is proximate end 126. While two different embodiments for split adiabatic pads 120 are illustrated in FIGURES 4-5, it should be understood that other embodiments for split adiabatic pads 120 are contemplated by this disclosure. For example, some embodiments of adiabatic cooling system 100 may include two adiabatic pads 120 on each side of adiabatic cooling system 100 that open from the center of adiabatic cooling system 100 outwards (e.g., similar to barn doors). As another example, some embodiments of adiabatic cooling system 100 may include two adiabatic pads 120 on each side of adiabatic cooling system 100 that are coupled to pivot points 121 that are on the sides of adiabatic cooling system 100 and open upwards or downwards about a horizontal pivot axis 122. Any other appropriate configuration (or combination of the above configurations) may be used to move adiabatic pads 120 between open and closed positions.

The components of adiabatic cooling system 100 may be integrated or separated. In some embodiments, components of adiabatic cooling system 100 may each be housed within a single enclosure. The operations of adiabatic cooling system 100may be performed by more, fewer, or other components. Additionally, operations of adiabatic cooling system 100 may be performed using any suitable logic that may comprise software, hardware, other logic, one or more processors, or any suitable combination of the preceding.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

## Claims

1. An adiabatic cooling system (100), comprising:
a condenser coil (110);
a plurality of adiabatic pads (120);
a plurality of frames (125), each frame (125) configured to:
hold a respective one of the plurality of adiabatic pads (120); and
pivot about a respective one of a plurality of pivot points (121); and
a pad pivoting system (160) configured to:
rotate each one of the plurality of frames (125) about the respective pivot point (121) of the frame (125) from an open position to a closed position; and
rotate each one of the plurality of frames (125) about the respective pivot point (121) of the frame (125) from the closed position to the open position;
wherein:
when the plurality of frames (125) are in the closed position, intake air for the adiabatic cooling system (100) passes through the plurality of adiabatic pads (120) prior to contacting the condenser coil (110); and
when the plurality of frames (125) are in the open position, intake air for the adiabatic cooling system (100) is unimpeded by the plurality of adiabatic pads (120) as the intake air enters the adiabatic cooling system (100) and contacts the condenser coil (110).

2. An adiabatic cooling system (100), comprising:
a condenser coil (110);
a plurality of adiabatic pads (120);
a plurality of frames (125), each frame (125) configured to hold a respective one of the plurality of adiabatic pads (120); and
a pad pivoting system (160) configured to:
move each one of the plurality of frames (125) from an open position to a closed position; and
move each one of the plurality of frames (125) from the closed position to the open position,
wherein:
when the plurality of frames (125) are in the closed position, intake air for the adiabatic cooling system (100) passes through the plurality of adiabatic pads (120) prior to contacting the condenser coil (110); and
when the plurality of frames (125) are in the open position, intake air for the adiabatic cooling system (100) enters the adiabatic cooling system (100) and contacts the condenser coil (110) without passing through the plurality of adiabatic pads (120).

3. The adiabatic cooling system (100) of Claim 1 or Claim 2, wherein the pad pivoting system (160) comprises a rack and pinion system (165) operable to move each one of the plurality of frames (125).

4. The adiabatic cooling system (100) of any one of Claims 1 to 3, wherein each respective frame (125) is coupled to the adiabatic cooling system (100) proximate to an end (126) of the respective frame (125).

5. The adiabatic cooling system (100) of any one of Claims 1 to 3, wherein each respective frame (125) is coupled to the adiabatic cooling system (100) proximate to a center point (127) of the respective frame (125).

6. The adiabatic cooling system (100) of any preceding Claim, further comprising a controller (140) operable to:
determine that the adiabatic cooling system (100) has switched from a wet mode to a dry mode and, in response to determining that the adiabatic cooling system (100) has switched from the wet mode to the dry mode, provide one or more signals to the pad pivoting system (160) to rotate each of the plurality of frames (125) to the open position; and/or
determine that the adiabatic cooling system (100) has switched from a dry mode to a wet mode and, in response to determining that the adiabatic cooling system (100) has switched from the dry mode to the wet mode, provide one or more signals to the pad pivoting system (160) to rotate each of the plurality of frames (125) to the closed position.

7. The adiabatic cooling system (100) of any preceding Claim, further comprising a manual control (150) operable to:
in response to a user-selection of the manual control (150), cause each one of the plurality of frames (125) to rotate from the open position to the closed position; and
in response to another user-selection of the manual control (150), cause each one of the plurality of frames (125) to rotate from the closed position to the open position.

8. An adiabatic cooling system (100), comprising:
a condenser coil (110);
a plurality of adiabatic pads (120); and
a pad pivoting system (160) configured to:
move each one of the plurality of adiabatic pads (120) from an open position to a closed position; and
move each one of the plurality of adiabatic pads (120) from the closed position to the open position,
wherein:
when the plurality of adiabatic pads (120) are in the closed position, intake air for the adiabatic cooling system (100) passes through the plurality of adiabatic pads (120) prior to contacting the condenser coil (110); and
when the plurality of adiabatic pads (120) are in the open position, intake air for the adiabatic cooling system (100) enters the adiabatic cooling system (100) and contacts the condenser coil (110) without passing through the plurality of adiabatic pads (120).

9. The adiabatic cooling system (100) of Claim 8, wherein the pad pivoting system (160) comprises a rack and pinion system (165) operable to move each one of the plurality of adiabatic pads (120).

10. The adiabatic cooling system (100) of Claim 8 or Claim 9, wherein each respective adiabatic pad (120) is coupled to the adiabatic cooling system (100) proximate to an end (126) of the respective adiabatic pad (120).

11. The adiabatic cooling system (100) of Claim 8 or Claim 9, wherein each respective adiabatic pad (120) is coupled to the adiabatic cooling system (100) proximate to a center point (127) of the respective adiabatic pad (120).

12. The adiabatic cooling system (100) of any one of Claims 8 to 11, further comprising a controller (140) operable to:
determine that the adiabatic cooling system (100) has switched from a wet mode to a dry mode and, in response, provide one or more signals to the pad pivoting system (160) to move each of the plurality of adiabatic pads (120) to the open position; and
determine that the adiabatic cooling system (100) has switched from a dry mode to a wet mode, and in response, provide one or more signals to the pad pivoting system (160) to move each of the plurality of adiabatic pads (120) to the closed position.

13. The adiabatic cooling system (100) of any one of Claims 8 to 12, further comprising a manual control (150) operable to:
in response to a user-selection of the manual control (150), cause each one of the plurality of adiabatic pads (120) to move from the open position to the closed position; and
in response to another user-selection of the manual control (150), cause each one of the plurality of adiabatic pads (120) to move from the closed position to the open position.
